# EUROPEAN PATENT SPECIFICATION

(11) **EP 2 743 080 B1**
(45) Date of publication and mention of the grant of the patent: **05.10.2016**
(21) Application number: 12400054.8
(22) Date of filing: 13.12.2012
(51) Int. Cl.: B32B 27/08, B32B 27/34, B32B 27/36, B32B 27/40, B64C 1/14

(54) **Multi-layered transparency and method of producing such a multi-layered transparency**
Transparente mehrschichtige Folie und Verfahren zur Herstellung einer solchen Folie
Film transparent multicouche et son procédé de fabrication

(43) Date of publication of application: 18.06.2014
(73) Proprietor: AIRBUS HELICOPTERS DEUTSCHLAND GmbH, 86609 Donauwörth (DE)
(72) Inventor: Kreitmair-Steck, Wolfgang, 80538 München (DE); Barnerssoi, Johan, 85586 Poing (DE)
(74) Representative: Schmid, Rudolf

(56) References cited:
- EP-A2- 1 804 088
- US-A1- 2006 014 035
- US-A1- 2006 030 692
- US-A1- 2009 029 154
- US-A1- 2010 112 355

## Description

The invention is related to a multi-layered transparency for an aircraft cockpit, particularly a multi-layered window for a helicopter cockpit with the features of claim 1 and to a method of producing such a multi-layered transparency with the features of claim 14.

Current cockpit windows for an aircraft are either monolithic windows made of polymeric materials, i. e. polycarbonate (PC) or polymethylmethacrylate (PMMA) or multi-layered windows made of several layers of different transparent materials: glass as well as polymeric materials such as PC, PMMA, polyvinyl butyral (PVB) and/or transparent urethane, such as thermoplastic polyurethane, (TPU).

The windows for an aircraft cockpit need to be optically highly transparent, scratch and abrasion resistant, protected against fragmentation and bird strikes, multi-hit capable with minimized distortion of the surrounding area and light-weight. The current requirements for the windows of an aircraft cockpit are, that upon impact, the inner ply must be non-splittering and the panes directly in front of the pilots must withstand without penetration a bird at cruise speed at mean sea level, according to for example FAA or EASA regulation, paragraph CS 29-631.

Ideally, the windows for an aircraft cockpit should additionally be anti-reflective, sound and infrared/heat absorbing and electrically switchable for thermal de-icing/defogging and dimming. Of course, deterioration of these properties during the lifetime of the aircraft should be minimal.

While current aircraft cockpit windows satisfy the basic requirements for certification, they cut back on other requirements. For example, most windows that have a high level of bird-strike resistance are very thick and heavy. Windows which are light-weight because of the extensive use of polymeric material have limited abrasion and scratch resistance or they suffer from deterioration such as yellowing or weakening by exposure to higher levels of UV radiation, an exposure which is normal for aircrafts flying in higher altitudes and therefore said windows have to be replaced in time. The cockpit windows of helicopters, which are operating closer to the ground with many take-offs and landings at unprepared sites are heavily attacked by sand, dust, small stones or ice particles whirled up by the rotors.

Providing good fragmentation resistance and easy manufacturability at a relatively low cost, since the early 1970s PC has been the material of choice for monolithic aircraft windows. However, it is well-known that PC is subject to aging, especially to yellowing and reduction of the transmission of light, by exposure to UV radiation already after fairly short time - a process which is significantly accelerated by exposure to hot temperatures/IR-radiation. Furthermore, unmodified PC is not scratch resistant and abrasion resistant.

Another polymeric material which is fairly widespread in aircraft window systems is PMMA. Though being highly transparent and more scratch resistant than PC, the material is brittle and in order to provide the necessary impact resistance for bird-strikes, the thickness of monolithic PMMA needs to be very high, because otherwise it exhibits catastrophic brittle failure with nearly no energy absorption. Of course, this necessity of high thickness significantly reduces the weight benefit of polymeric materials. Stretched PMMA (e.g. stretched PLEXIGLAS® GS249 from EVONIK Industries), i.e. PMMA which is hot stretched in two directions after casting, is less sensitive to micro-cracking on impact than normal PMMA, but by this process other desired properties of the material are reduced. Furthermore, it is well-known to the experts that also PMMA is at risk of yellowing due to photo oxidation and weakening due to chain scission from UV exposure. Therefore, stabilizers, absorbers or blockers are mixed into the material (cf. e.g. US 2009/0093578A1).

Since end of the 1990s multi-layered compound materials built-up from both, PC and PMMA are used for aircraft windows in order to improve the impact properties and to reduce the thickness of the windows. Using PMMA as a front layer and PC as a backing material for the laminated windows, the impact energy - especially from small objects - is distributed over a wider area and partially destroyed by the brittle PMMA. Patent application US2010/0112355 from May 6, 2010 is an example of such a design. Here, as it is already popular for automotive windows, an interlayer made of polyvinyl butyral (PVB) or transparent thermoplastic urethane film is used for confining defects to the upper and lower layers. It has been demonstrated successfully in numerous cases that this kind of hybrid composite (PMMA+interlayer+PC) shows an improved impact response compared to monolithic (PMMA or PC) windows. Experiments have further shown that material thicknesses and the bonding between the layers drastically affect the system performance: "no bonding" showing worst, "strong bonding" second best, and "weak/soft bonding" best results; however, if the thickness of the elastic interlayer exceeds a certain amount and Young's modulus of the material is very small, this layer is compressed upon impact considerably, its impedance rises resulting in increasing stress/shock wave transmission to the backing layer and therefore delamination.

In general, it is important for improved impact response that adjacent materials have different mechanical characteristics and different speeds of sound, otherwise they behave like just one monolithic material. The changes of the speed of sound cause reflective waves at the material borders. By this effect, the energy of the shockwave at the final exit area of the composite window is reduced.

In order to improve the toughness and chemical resistance, in many aircraft windows a layer of glass has been laminated on top (and possibly on bottom) of the plastic (cf. e.g. Transparency Bulletin PPG Aerospace, Cockpit Windows, Winter 2004). But since the density of glass is more than double the density of PC or PMMA, this has been a compromise with the disadvantage of significantly increased weight.

The document US 2010/0112355 A1 discloses a hybrid polymeric aircraft transparency easy to maintain because scratches can be polished out of the surface. Further, the transparency is light in weight and relatively tough because it is constructed of polycarbonate layers instead of acrylics. The transparency is constructed using injection-compression-molding techniques. The top layer is made of PMMA or other acrylic. In order to achieve the desired impact resistance, the top layer of this approach needs to have a thickness of at least 8.74 mm. The overall thickness of the aircraft transparency is at least 12.91 mm. The abrasion resistance of acrylic is insufficient. Therefore, the transparency needs much effort, e.g. special coating, to achieve a satisfying level of abrasion resistance.

The document US 6 559 230 A1 discloses safety glass interlayers prepared from a composition comprising: A. A homogeneously linear or substantially linear ethylene/alpha-olefin interpolymer, e.g., ethylene/1-octene; B. A coagent containing at least two vinyl groups, e.g., trimethyol propane tri(meth)acrylate; and C. A peroxide, e.g., Luperox(TM) 101. The interlayer films exhibit tear strength and clarity.

The document DE 102 01 492 A1 discloses an optical coating system for radiation-sensitive plastic substrates comprising a protective layer of oxide material with high absorbance in the range of wavelengths below 250 nm and functional optical layer(s) deposited on layer. A method is provided for the adhesive coating of substrates with an optical coating system using the PVD technique, by deposition of oxide layer on by means of resistive evaporation, followed by deposition of layer(s).

The document DE 10 2010 006 133 A1 discloses a system having a UV absorbing layer made of organic material and comprised with an absorption edge having a wavelength of 350-420 nm. A high refractive index layer and low refractive index layer are sequentially stacked on the UV absorbing layer. A laminated structure is formed comprising the UV absorbing layer and high and low refractive index layers. A method is provided for manufacturing an antireflection coating system.

The document US 2011/0151218 A1 discloses a multilayer system comprising a base layer consisting of a thermoplastic, a primer layer and a scratch resistant layer consisting of a scratch resistant top coat. The primer layer contains a certain UV absorber. A certain amount of acid, preferably acetic acid, is added to the scratch resistant top coat.

The document AU 2004/200718 B9 discloses a molding composition, composed of at least 60% by weight of transparent polyamide. The molding composition comprises an effective amount of one or more optical brighteners. The amount of optical brighteners has been judged in such a way that a) the b value, which is a measure of yellowness, is at most 7, and moreover b) between 370 nm and 430 nm, at least in a lower part of the range, the transmittance is smaller than 1% at the layer thickness of 4 mm. The molding composition can be processed to give products which are substantially impermeable to UV light.

The document US 6 561 460 A1 discloses an electrochromic aircraft window assembly including: a) an outboard pane assembly; and b) a fog preventing electrochromic pane assembly spaced from the outboard pane assembly and defining a chamber there between. The fog preventing electrochromic pane assembly has: i) a first substrate having a first surface including a first conductive coating and a second surface including a second conductive coating; ii) a second substrate spaced from the first substrate, the second substrate having a first surface including a third conductive coating, the second surface of the first substrate and the first surface of the second substrate facing each other in spaced-apart relation to define a chamber there between; iii) an electrochromic medium contained in the chamber and in contact with the second and the third conductive coatings, the electrochromic medium having a luminous transmittance that varies upon application of an electrical potential through the electrochromic medium; iv) facilities for applying electrical current to the first conductive coating to heat the first conductive coating, thereby preventing fogging of the window assembly; and v) facilities for applying electrical current to the second and the third conductive coatings to establish the electrical potential through the electrochromic medium and vary the variable luminous transmittance of the electrochromic medium. Said aircraft transparencies are built up from two panes which are separated by a chamber there between. This clearly is undesirable for aircraft cockpit windows, especially for helicopter cockpit windows because of its limited bird-strike resistance as well as the possible optical distortions caused by this arrangement which are inacceptable for piloting.

The document US 2009/0093578 A1 discloses a biaxially stretched transparent acrylic sheet having controlled solar energy transmittance properties for aircraft window systems. The biaxially stretched transparent acrylic sheet includes a thermoplastic acrylic polymer and from about 0.003 percent by weight to about 0.1 percent by weight of an IR absorbing material, the weight percentage based on the a total weight of the acrylic polymer and the IR absorbing material. The IR absorbing material preferentially absorbs energy having wavelengths from about 700 nm to about 1100 nm. The IR absorbing material is selected from the group consisting of perylene based dyes, nanoparticle hexaboride based IR absorbers, and mixtures thereof.

The document US 5 840 429 A discloses an aircraft transparency including an electroconductive metal oxide coating over a rigid plastic substrate, and a polyurethane protective liner over the metal oxide coating, and more specifically the use of a primer for adhering the metal oxide coating to the substrate and/or a primer for adhering the polyurethane protective liner to the metal oxide coating. The metal oxide primer includes a carbonate diol-based crosslinked polyurethane. The polyurethane primer is selected from the group consisting of a crosslinked copolymer of acrylic acid and substituted acrylates such as 2-ethylhexylacrylate; a crosslinked copolymer of cyanoethylacrylate and acrylic acid; and a crosslinked terpolymer of 2-ethylhexylacrylate, cyanoethylacrylate and acrylic acid.

It is an object of the invention to provide a light-weight multi-layered transparency for an aircraft cockpit, particularly a multi-layered window for a helicopter cockpit, which is optically highly transparent, scratch resistant and abrasion resistant, protected against fragmentation and bird strikes and multi-hit capable with minimized distortion of the surrounding area.

It is a further object of the invention to provide a light-weight multi-layered transparency for an aircraft cockpit, particularly a multi-layered window for a helicopter cockpit which is sound absorbing, anti-reflective, infrared/heat absorbing, electrically switchable for thermal window de-icing + moisture/fog removal with a dimming/electrical control of the light transmission. For safety reasons, the dimming/ electrical control of the light transmission should be automatically switched off, in case the power is switched off or if it is lost by an incident. Any deterioration of the before mentioned properties of the inventive light-weight multi-layered transparency during the lifetime of the aircraft needs to be minimal. It is a further object of the invention to provide a method for producing such a light-weight multi-layered transparency for an aircraft cockpit.

A solution is provided with a light-weight multi-layered transparency for an aircraft cockpit, particularly a multi-layered window for a helicopter cockpit with the features of claim 1 of the invention. A further solution is provided with a method for producing such a light-weight multi-layered transparency for an aircraft cockpit with the features of claim 12 of the invention.

According to the invention a multi-layered transparency for an aircraft cockpit, particularly a multi-layered window for a helicopter cockpit, comprises one core layer made of a polymer of either PC or microcrystalline polyamide (mcPA), at least one foil extruded adhesive interlayer film unilaterally attached to said at least one core layer made of PC or mcPA and at least one outer top layer made of mcPA, said at least one outer top layer preferably containing additives such as optical brighteners for UV-protection. Said at least one outer top layer is unilaterally attached to said at least one foil extruded adhesive interlayer film distal to said at least one core layer made of PC or mcPA. A scratch resistant outer top coating is applied e.g. by spraying or dipping or preferably physical or chemical vacuum deposition unilaterally onto said at least one preferably ion or plasma surface treated outer top layer distal to said at least one foil extruded adhesive interlayer film. The ion or plasma surface treatment is preferred in order to increase the adhesion of the coatings. The inventive multi-layered transparency with at least one layer of mcPA allows all the advantages for impact/bird-strike resistance, protection against fragmentation and multi-hit capability, such as against multi bird strikes, with minimized distortion of the surrounding area compared to any state of the art transparencies of equal thickness or the inventive multi-layered transparency allows reduced weight compared to any state of the art transparencies with similar performance. The inventive multi-layered transparency is optically transparent with an optical transmission > 85%, scratch resistant with a <= 32% turbidity increase according to DIN 52347 and abrasion resistant <= 18 mg/100 rev. according to DIN 53754, infrared/heat and sound absorbing, anti-reflective and electrically switchable for inherent heating, to allow de-icing/moisture/fog removal. The inventive multi-layered transparency according to the description above is easily adaptable to modified requirements during the lifetime of the aircraft and the inventive multi-layered transparency is modular designed. The inventive multi-layered transparency is preferably used for cockpit side windows or floor/ceiling windows where the impact forces in case of bird-strikes are less than for the front windows. Any deterioration of the advantageous properties of the inventive multi-layered transparency during the lifetime of an aircraft is minimal.

According to a preferred embodiment of the invention respectively one foil extruded adhesive interlayer film is bonded to either sides of said one core layer made of PC or mcPA and one outer top layer made of mcPA is attached to either of said bilateral foil extruded adhesive interlayer films distal to said at least one core layer made of PC or mcPA. Scratch resistant outer top coatings are provided to either side of said outer top layers distal to said two foil extruded adhesive interlayer films. This preferred inventive multi-layered transparency is essentially symmetric with regard to said one core layer made of PC or mcPA. The two outer top layers of the preferred inventive multi-layered transparency function as protective layers being highly scratch and abrasion resistant as well as resistant to UV radiation. The core layer functions as a structural load transmitting and as a load dispatching component. The inventive multi-layered transparency is preferably used for cockpit front windows against the unrestraint impact forces in case of bird-strikes. All of the advantageous properties according to the invention are inherent to the preferred inventive multi-layered transparency.

All layers of the inventive multi-layered transparency show elastic behaviour in different degrees and none of said layers allow brittle behaviour during any impact situations. This is an important advantage of the inventive multi-layered transparency for not allowing catastrophic failure upon any impact and in providing multi-hit capability.

The foil extruded adhesive interlayer films of the inventive multi-layered transparency guarantee at least partial reflection of a shock wave caused by an impact and additionally function as energy absorbers. These foil extruded adhesive interlayer films also function as sound absorbers. The thickness of these foil extruded adhesive interlayer films are adjusted in such a way that the interlayers absorb as much energy as possible but don't cause delamination after reloading compressive energy by avoiding higher thickness, said higher thickness meaning higher probability of delamination of the inventive multi-layered transparency.

Adjacent materials of the inventive multi-layered transparency have different mechanical characteristics and different speeds of sound. The changes of the speed of sound cause reflective waves at the material borders. By this effect, the energy of the shockwave at the final exit area of the inventive multi-layered transparency is reduced.

According to the invention the foil extruded adhesive interlayer film comprises two foil extruded films with a functional layer in between.

According to a further preferred embodiment of the invention the functional layer is provided with an active electro chromatic polymer, a conductive coating and/or with a wire grid.

According to a further preferred embodiment of the invention an adhesive primer is provided for adhesion of the two foil extruded films to the functional layer.

According to a further preferred embodiment of the invention the foil extruded adhesive interlayer film is made of ionoplast compositions (IOPL) or Thermoplastic Polyurethane (TPU), preferably transparent TPU, e. g. with a density of 1.2 g/cm³, or more preferably impact tough ionoplast compositions, e. g. with a density of 0.95 g/cm³, since said compositions can contribute to the structural strength of the cockpit window with a tensile strength of 34.5 MPa and a Young's modulus of 300 MPa. At least the outside foil extruded adhesive interlayer film is made of IOPL or TPU for improved transparency.

According to a further preferred embodiment of the invention the two foil extruded films are made of IOPL, transparent TPU or PVB or a combination of IOPL, transparent TPU or PVB, one of inner contact sides in between the two foil extruded films being provided with the conductive coating as a functional layer and in that the conductive coating is provided with electrical contacts.

According to a further preferred embodiment of the invention the conductive coating is metallic, made by physical vapour deposition (PVD) with transparent conductive oxides (TCO) e.g. indium tin oxide, or in that the functional layer is provided by a conductive wire grid.

According to a further preferred embodiment of the invention the conductive coating is laminated as a polymer layer with the active electro-chromatic polymer in between the layers at those parts of the aircraft's transparency which require controllable light transmission. The active electro-chromatic component is provided with electrical contacts. A respective electro-chromatic polymer is developed e.g. by a technology known as "Single Layer Electro-chromatic Polymer Technology".

According to a further preferred embodiment of the invention the dimming/darkening is automatically switched off for safety reasons, in case the power of the aircraft is switched off or if it is lost by an incident.

According to a further preferred embodiment of the invention the scratch resistant outer top coating is combined with an anti-reflective coating, said anti-reflective coating being a single layer or a multi-layer interference coating, depending on the required reflectivity value for the inventive multi-layered transparency.

According to a further preferred embodiment of the invention heat absorption is provided for the inventive multi-layered transparency by mixing 0.01 percent by weight up to about 0.1 percent by weight of an IR absorbing material into the outer top layer composition based on microcrystalline polyamide.

According to a preferred embodiment of the invention a method of producing the multi-layered transparency in four steps is provided. Said method is preferably executed in clean room environment. In a first step of said method at least one foil extruded adhesive interlayer film is manufactured from at least one foil extruded film. In a second step at least one outer top layer made of mcPA and one core layer made of a polymer of mcPA or PC are manufactured by either injection compression molding with temperatures of 300° C for the PC layers and 280°-300° C for the mcPA layers, with mold temperatures in both cases of 80° C, or by temperature forming/shaping of PC and mcPA sheets at temperatures between 140° C and 145° C for each individual sheet or for all sheets in one step. Assembling is effected in a third step by laying the core layer, forming the at least one further heated foil extruded adhesive interlayer film around the core layer, adding the outside outer top layer and curing the assembly in an autoclave. In a fourth step the assembly is coated by plasma treatment on either both sides or on the outside only. The inventive method of producing the multi-layered transparency is easy to fabric at relatively low cost.

Preferably assembling is effected in the third step by laying first an inside outer top layer on top a supporting form, forming one further heated foil extruded adhesive interlayer film around this inside outer top layer before adding the core layer.

According to a further preferred embodiment of the invention sheet forming is made with only one mold or - if the radii of the sheets are too small - with several geometrically adapted molds.

According to a further preferred embodiment of the invention all the sheets formed together are stacked in a final sequence with at least one Teflon/fluoropolymere foil in between, said at least one Teflon/fluoropolymere foil having the expected thickness of the at least one further interlayer film which will be used in the subsequent assembly step, respectively. The Teflon/fluoropolymere foil(s) serve(s) for spacing the layers during forming in order to prevent fusion of the materials and assuring the adequate nested geometry for the final assembly, with the advantage that one mould is enough for the inventive method of producing the multi-layered transparency.

According to a further preferred embodiment of the invention the at least one heatable foil extruded adhesive interlayer film is preassembled by melting or adhesive fixation of the first foil extruded film with the conductive coating such as the active electro chromatic polymer on the polyethylene as the functional layer and draping of the heated second foil extruded film. The preassembled heatable foil extruded adhesive interlayer film is formed around the inner top layer.

Preferred embodiments of the invention are described with reference to the following description and drawings.
Fig. 1 shows a schematic view of a helicopter's cockpit with cross sectional extracts of two types of multi-layered transparencies according to the invention,
Fig. 2a shows a cross sectional view of one of the two types of multi-layered transparencies according to Fig. 1,
Fig. 2b shows a cross sectional view of the other one of the two types of multi-layered transparencies according to Fig. 1,
Fig. 3a shows a cross sectional view of a foil extruded adhesive interlayer film of one of the two types of multi-layered transparencies according to Fig. 1,
Fig. 3b shows a cross sectional view of a further foil extruded adhesive interlayer film of one of the two types of multi-layered transparencies according to Fig. 1, and
Fig. 3c shows a cross sectional view of a still further foil extruded adhesive interlayer film of the other one of the two types of multi-layered transparencies according to Fig. 1.

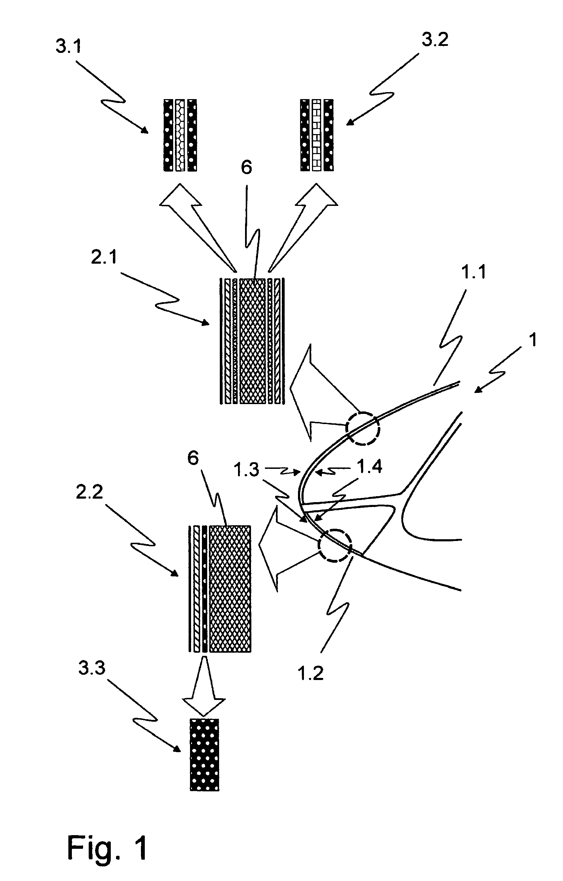

According to Fig. 1 a cockpit 1 of a helicopter is provided with transparencies, namely with a cockpit front window 1.1 with an area > 0.25 m² and a floor/ceiling window 1.2. The cockpit front window 1.1 and the floor/ceiling window 1.2 are respectively provided with an inner surface 1.4 oriented towards the interior of the cockpit 1 and an outer surface 1.3 oriented towards outside ahead of the cockpit 1. The cockpit front window 1.1 and the floor/ceiling window 1.2 are respectively mounted to frames of the cockpit 1.

The cockpit front window 1.1 for maximum bird strike resistance is made of a first multi-layered transparency 2.1, comprising one core layer 6 made of PC or mcPA and two foil extruded adhesive interlayer films 3.1, 3.2 bonded to either side of said one core layer 6. One of said films 3.1 is oriented towards outside and the other of said films 3.2 is oriented towards inside with regard to the core layer 6.

The floor/ceiling window 1.2 with reduced bird strike resistance is made of a second multi-layered transparency 2.2, composed of the one core layer 6 made of PC or mcPA and one foil extruded, adhesive interlayer film 3.3 unilaterally bonded to said at least one core layer 6. Said film 3.3 is oriented towards outside with regard to the core layer 6.

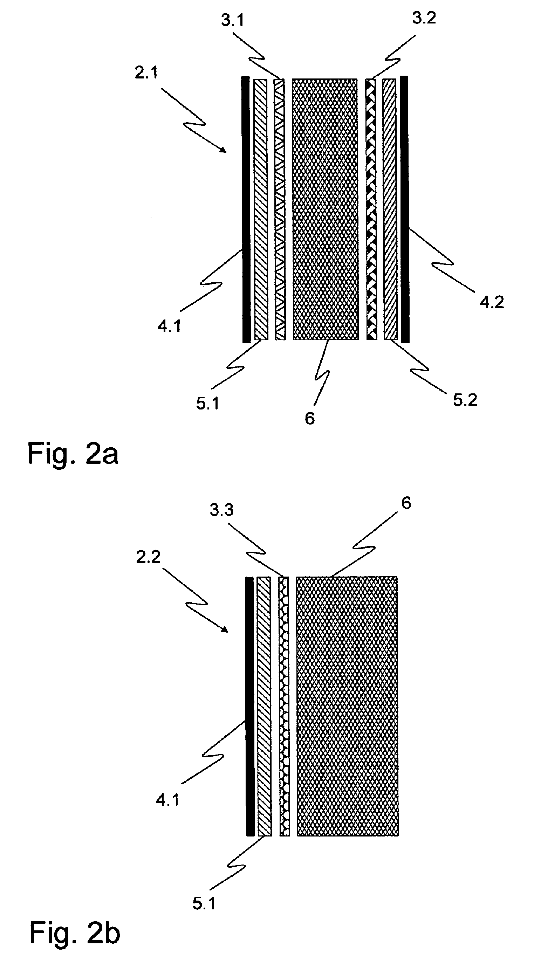

According to Fig. 2a corresponding features are referred to with the references of Fig. 1. The first multi-layered transparency 2.1 comprises one central core layer 6 made of PC or mcPA as a structural load transmitting load dispatching component. The thickness of the core layer 6 is in the range of 2.5 mm to 8 mm.

Two foil extruded adhesive interlayer films 3.1, 3.2 are bonded to either side of said one core layer 6. One of said two foil extruded adhesive interlayer films 3.1 is oriented towards outside and the further foil extruded adhesive interlayer film 3.2 is oriented towards inside with regard to the core layer 6. The thickness of the foil extruded adhesive interlayer films 3.1, 3.2 is in the range of 0.3 mm to 1.8 mm.

An outer top layer 5.1, made of mcPA, is unilaterally - i. e. towards outside with regard to the core layer 6 - attached to said one outside foil extruded adhesive interlayer film 3.1 distal to said one core layer 6. The outer top layer 5.1 contains optical brighteners for UV-protection and for heat absorption 0.01 percent by weight up to about 0.1 percent by weight of an IR absorbing material as additives. The thickness of the outer top layer 5.1 is in the range of 0.4 mm to 8 mm. The outer top layer 5.1 of the first multi-layered transparency 2.1 functions as a protective layer being highly scratch and abrasion resistant as well as resistant to UV radiation.

A scratch resistant outer top coating 4.1 is applied unilaterally to said one outer top layer 5.1 distal to said one outside foil extruded adhesive interlayer film 3.1. The scratch resistant outer top coating 4.1 is provided as a micro layer, preferably combined with a single layer or a multi-layer interference anti-reflective coating.

An inside outer top layer 5.2, made of mcPA, is unilaterally - i. e. towards inside and opposed to the outer top layer 5.1 with regard to the core layer 6 - attached to the further inside foil extruded adhesive interlayer film 3.2 distal to said one core layer 6. The inside outer top layer 5.2 contains preferably optical brighteners for UV-protection and even more preferably additionally for heat absorption 0.01 percent by weight up to about 0.1 percent by weight of an IR absorbing material as additives. The thickness of the inside outer top layer 5.2 is in the range of 0.4 mm to 8 mm.

A further scratch resistant outer top coating 4.2 is applied unilaterally to said inside outer top layer 5.2 distal to said further foil extruded adhesive interlayer film 3.2. The further scratch resistant outer top coating 4.2 is provided as a micro layer.

The outer top layers 5.1, 5.2 function as a protective layer being highly scratch and abrasion resistant as well as resistant to UV radiation.

According to Fig. 2b corresponding features are referred to with the references of Fig. 1 - Fig. 2a. The second multi-layered transparency 2.2 comprises one central core layer 6 made of PC or mcPA as a structural load transmitting load dispatching component. The thickness of the core layer 6 is in the range of 2.5 mm to 8 mm.

A still further foil extruded adhesive interlayer film 3.3 is bonded to said one core layer 6, said still further foil extruded adhesive interlayer film 3.3 being oriented towards outside with regard to the core layer 6. The thickness of the still further foil extruded adhesive interlayer film 3.3 is in the range of 0.3 mm to 1.8 mm.

The outer top layer 5.1, made of mcPA and with optical brighteners for UV-protection and preferably in addition with 0.01 percent by weight up to about 0.1 percent by weight of an IR absorbing material for heat absorption as additives, is unilaterally - i. e. towards outside with regard to the core layer 6 - attached to said still further foil extruded adhesive interlayer film 3.3 distal to said one core layer 6. The thickness of the outer top layer 5.1 is in the range of 0.4 mm to 8 mm.

The density of mcPA, e. g. the density of microcrystalline polyamide = 1.02 g/cm³, is less than the density of PMMA = 1.19 g/cm³ or the density of PC = 1.2 g/cm³). Consequently the overall weight of a cockpit window with the multi-layered transparencies 2.1, 2.2 is less than the weight of a monolithic PC, monolithic PMMA or combined multi-layered PMMA-PC-PMMA transparency of equal thickness.

The scratch resistant outer top coating 4.1 is applied unilaterally to said one outer top layer 5.1 distal to said still further foil extruded adhesive interlayer film 3.3. The scratch resistant outer top coating 4.1 is provided as a micro layer, preferably combined with a single layer or a multi-layer interference anti-reflective coating.

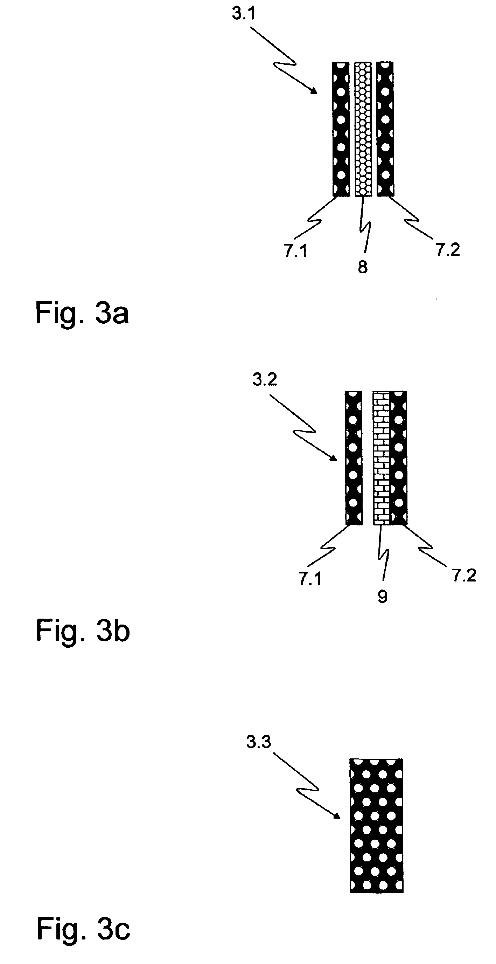

According to Fig. 3a corresponding features are referred to with the references of Fig. 1 - Fig. 2b. The foil extruded adhesive interlayer film 3.1 comprises two foil extruded films 7.1, 7.2 with an active electro-chromatic polymer on a transparent plastic, e.g. a polyethylene as a functional layer 8 in between. The foil extruded films 7.1 and 7.2 are treated with an adhesive primer on their sides respectively oriented towards the functional layer 8 before their application to the functional layer 8, i.e. the respective active electro-chromatic polymer. The functional layer 8 is coated to one side of one of the two foil extruded films 7.1, 7.2, said one side being oriented towards the other one of the two foil extruded films 7.1, 7.2.

The functional layer 8 is provided with electric contacts (not shown) for supply of electric power from the on board grid to the functional layer 8 for dimming/darkening. On board control means (not shown) are provided to automatically control the dimming/darkening and to switch off the electric power supply to the functional layer 8 for safety reasons.

The two foil extruded films 7.1 and 7.2 of the foil extruded adhesive interlayer film 3.1 are made of IOPL, transparent TPU or PVB or a combination of IOPL, transparent TPU or PVB.

According to Fig. 3b corresponding features are referred to with the references of Fig. 1 - Fig. 3a. The further foil extruded adhesive interlayer film 3.2 comprises two foil extruded films 7.1, 7.2. Foil extruded film 7.2 is coated with a metallic coating or fitted with a wire grid and provided with electric contacts (not shown) for heating purposes. The use of the further foil extruded adhesive interlayer film 3.2 corresponds to the use of the outside foil extruded adhesive interlayer film 3.1.

The two foil extruded films 7.1 and 7.2 of the further foil extruded adhesive interlayer film 3.2 are made of IOPL, transparent TPU or PVB or a combination of IOPL, transparent TPU or PVB.

According to Fig. 3c corresponding features are referred to with the references of Fig. 1 - Fig. 3b. The still further foil extruded adhesive interlayer film 3.3 is made of an impact tough ionoplast with a density of 0.95 g/cm³ and a tensile strength of 34.5 MPa and a Young's modulus of 300 MPa.

A method of producing a multi-layered transparency

For the manufacturing of the multi-layered transparencies for cockpit windows four different steps are provided, all of them being performed preferably in clean room environment:
1. Manufacturing of the foil extruded adhesive interlayer films 3.1 - 3.3,
2. Manufacturing of the outer top layers 5.1, 5.2 and the core layer 6,
3. Assembling and curing the multi-layered transparency for cockpit windows and
4. Coating the multi-layered transparency for cockpit windows.

Step 1 is the manufacturing of the simple or complex foil extruded adhesive interlayer films 3.1 - 3.3. The simple foil extruded adhesive interlayer film 3.3 is produced with foil extrusion. The complex foil extruded adhesive interlayer films 3.1 and 3.2 are each manufactured with two foil extruded films 7.1 and 7.2.

The films 7.1 and 7.2 are treated with an adhesive primer before their application on both sides of the functional layer 8, i.e. the respective active electro-chromatic polymer.

The foil extruded film 7.2 is coated with a metallic conductive coating as functional layer 9. The adhesion of both foil extruded films 7.1 and 7.2 is supported with an adhesive primer to the preassembled complex foil extruded adhesive interlayer films 3.1 and 3.2.

If the application of a wire grid is used for heating purposes instead of the conductive coating, the complex foil extruded adhesive interlayer film 3.2 is built during the assembly step. The conductive wire grid 9 of figure 3b is applied after assembling the first inner layers including the extruded foil film 7.2 in order to prevent cracking of the wires during consecutive forming.

For the production of the outer top layers 5.1, 5.2 and the core layer 6 in step 2, there exists essentially two major alternatives:
1) The first one is injection compression molding with temperatures of 300° C for the PC layers and 280°-300° C for the mcPA layers, with mold temperatures in both cases of 80° C.
2) The second one is temperature forming/shaping of PC and mcPA sheets at temperatures between 140°C and 145° C. This can be done for each individual sheet or for all sheets in one step. Depending on the minimal radii of the window/transparency the sheet by sheet forming could be performed with only one mold or - if the radii are too small - with several geometrically adapted molds.

If all the sheets are formed together, they need to be stacked in the final sequence with Teflon/fluoropolymere foils in between, which have the expected thickness of the interlayers 3.1, 3.2, and 3.3, respectively. These Teflon/ fluoropolymere foils serve for spacing the layers during forming in order to prevent fusion of the materials and assuring the adequate nested geometry for the final assembly.

The assembly in step 3 for a transparency according to Fig. 2a preferably starts with the inside outer top layer 5.2 laid on top a supporting form. The heated foil extruded adhesive interlayer film 3.2 with an exact temperature depending on the forming temperature of the decided interlayer material, e.g. 70°-85°C for IOPL, 60°-110°C for TPU, 60° - 75°C for PVB, is then formed around this inside outer top layer 5.2.

A wire grid for heating purposes is integrated into the heated foil extruded adhesive interlayer film 3.2 by application of the foil extruded film 7.2 to the inside outer top layer 5.2, application of the wire grid 9 to the foil extruded film 7.2 and draping and adhesive fixation of the foil extruded film 7.1 on top of the wire grid.

The next assembly steps consist in adding the core layer 6 to the further heated foil extruded adhesive interlayer film 3.2, forming the heated foil extruded adhesive interlayer film 3.1 around the core layer 6, and finally add the outer top layer 5.1 on top of the heated foil extruded adhesive interlayer film 3.1 to the assembly.

For all assembly steps adhesive primers that don't reduce the optical properties between the layers 5.1, 5.2, 6 are deposited to increase bond between of the assembly.

The resulting assembly of layers 5.1, 5.2, 6 is placed into an autoclave by appropriate provisions and cured by controlled process parameters.

In the fourth step the multi-layered transparency 2.1, 2.2 for the composite window is optionally plasma treated for increased adhesion of the coats 4.1 and 4.2 coated to the both sides of the first multi-layered transparency 2.1 or to one outer side of coat 4.1 only for the second multi-layered transparency 2.2.

### Reference List

- 1: cockpit
- 1.1: cockpit front window
- 1.2: floor/ceiling window
- 1.3: outer surface
- 1.4: inner surface
- 2.1: first multi-layered transparency
- 2.2: second multi-layered transparency
- 3.1: foil extruded adhesive interlayer film
- 3.2: further foil extruded adhesive interlayer film
- 3.3: still further foil extruded, adhesive interlayer film
- 4.1: outer top coating
- 4.2: further outer top coating
- 5.1: outer top layer
- 5.2: inside outer top layer
- 6: core layer
- 7.1: foil extruded film
- 7.2: foil extruded film

## Claims

1. A multi-layered transparency (2.1, 2.2) for an aircraft cockpit, particularly a multi-layered window for a helicopter cockpit (1), comprising:
- one core layer (6) made of a polymer of either polycarbonate (PC) or microcrystalline polyamide (mcPA),
- at least one foil extruded, adhesive interlayer film (3.1, 3.2, 3.3) unilaterally bonded to said at least one core layer (6),
- at least one outer top layer (5.1, 5.2) made of microcrystalline polyamide (mcPA), preferably containing additives, said at least one outer top layer (5.1, 5.2) being unilaterally attached to said at least one foil extruded adhesive interlayer film (3.1, 3.2, 3.3) distal to said at least one core layer (6), and
- a scratch resistant outer top coating (4.1, 4.2), provided unilaterally to said at least one outer top layer (5.1, 5.2) distal to said at least one foil extruded adhesive interlayer film (3.1, 3.2, 3.3),
**characterized in that** the at least one foil extruded adhesive interlayer film (3.1, 3.2, 3.3) comprises two foil extruded films (7.1, 7.2) with a functional layer (8, 9) in between.

2. The multi-layered transparency (2.1) according to claim 1,
**characterized in that** respectively one foil extruded adhesive interlayer film (3.1, 3.2) is bonded to either side of said one core layer (6),
- one outer top layer made of microcrystalline polyamide (mcPA) (5.1, 5.2) is attached to either of said bilateral foil extruded adhesive interlayer film (3.1, 3.2) distal to said at least one core layer (6), and
- scratch resistant outer top coatings (4.1, 4.2) are provided to either side of said outer top layers (5.1, 5.2) distal to said two foil extruded adhesive interlayer films (3.1, 3.2).

3. The multi-layered transparency (2.1) according to claim 1,
**characterized in that** the functional layer (8, 9) is an active electro chromatic polymer, a conductive coating and/or a wire grid.

4. The multi-layered transparency (2.1) according to claim 1,
**characterized in that** an adhesive primer is provided for adhesion of the two foil extruded films (7.1, 7.2) to the functional layer (8, 9).

5. The multi-layered transparency (2.1, 2.2) according to claim 1 or 2,
**characterized in that** the outer top layer (5-1, 5.2) made of microcrystalline polyamide (mcPA) contains optical brighteners for UV-protection.

6. The multi-layered transparency (2.1) according to claim 3,
**characterized in that** the two foil extruded films (7.1, 7.2) are made of ionoplast compositions (IOPL), transparent thermoplastic polyurethane (TPU) or polyvinyl butyral (PVB) or a combination of ionoplast compositions (IOPL), transparent thermoplastic polyurethane (TPU) or polyvinyl butyral (PVB), one of inner contact sides in between the two foil extruded films (7.1, 7.2) being provided with the conductive coating as a functional layer (8) and **in that** the conductive coating is provided with electrical contacts.

7. The multi-layered transparency (2.1) according to claim 6,
**characterized in that** the conductive coating is preferably metallic, made by physical vapour deposition (PVD) with transparent conductive oxides (TCO) e.g. indium tin oxide, or **in that** the functional layer (9) is provided by a conductive wire grid.

8. The multi-layered transparency (2.1) according to claim 6,
**characterized in that** the conductive coating is laminated as a polymer layer with locally an active electro-chromatic component in between the foil extruded films (7.1, 7.2).

9. The multi-layered transparency (2.1, 2.2) according to claim 7 or 8,
**characterized in that** the active electro chromatic polymer, the metallic conductive coating and/or the wire grid as means for dimming/darkening are automatically switched off, if power of the aircraft is switched off or if said power is lost by an incident.

10. The multi-layered transparency (2.1, 2.2) according to claim 1 or 2,
**characterized in that** the scratch resistant outer top coating is combined with an anti-reflective coating, said anti-reflective coating being a single layer or a multi-layer interference coating.

11. The multi-layered transparency (2.1, 2.2) according to claim 1 or 2,
**characterized in that** 0.01 percent by weight up to about 0.1 percent by weight of an IR absorbing material is mixed into the outer top layer (5.1, 5.2) composition based on microcrystalline polyamide (mcPA).

12. A method of producing the multi-layered transparency (2.1, 2.2) according to any of the preceding claims in four steps, preferably in clean room environment, by
- Manufacturing at least one foil extruded adhesive interlayer film (3.1- 3.3) in a first step by treating with an adhesive primer the first foil extruded film (7.1) and the second foil extruded film (7.2) and by applying both films (7.1, 7.2) on both sides of the functional layer (8),
- Manufacturing in a second step at least one outer top layer (5.1, 5.2) made of microcrystalline polyamide (mcPA) and one core layer (6) made of a polymer of microcrystalline polyamide (mcPA) or polycarbonate (PC) by either injection compression molding with temperatures of 300° C for the polycarbonate (PC) layers and 280°-300° C for the microcrystalline polyamide (mcPA) layers, with mold temperatures in both cases of 80° C,
or by temperature forming/shaping of polycarbonate (PC) and microcrystalline polyamide (mcPA) sheets at temperatures between 140° C and 145° C for each individual sheet or for all sheets in one step,
- Assembling in a third step by laying the core layer (6), forming and heating between 60° C and 110° C the at least one foil extruded adhesive interlayer film (3.1 - 3.3) around the core layer (6), adding the at least one outer top layer (5.1, 5.2) and curing the assembly in an autoclave,
- Coating the assembly in a fourth step by plasma treatment on at least one outer top layer (5.1, 5.2).

13. The method according to claim 12,
**characterized by** sheet forming with only one mold or - if the radii of the sheets are too small -with several geometrically adapted molds.

## Patentansprüche

1. Transparente, mehrschichtige Folien (2.1, 2.2) für ein Cockpit eines Luftfahrzeugs, insbesondere mehrschichtiges Fenster für ein Hubschrauber-Cockpit (1), mit:
- einer Kernschicht (6), hergestellt aus einem Polymer aus entweder Polycarbonat (PC) oder mikrokristallinem Polyamid (mcPA),
- mindestens einer extrudierten, klebenden Zwischenfolie (3.1, 3.2, 3.3), die einseitig mit der mindestens einen Kernschicht (6) verklebt ist,
- mindestens einer äußeren Deckschicht (5.1, 5.2) aus mikrokristallinem Polyamid (mcPA), welches vorzugsweise Additive enthält, wobei die mindestens eine äußere Deckschicht (5.1, 5.2) einseitig an der mindestens einen extrudierten klebenden Zwischenfolie (3.1, 3.2, 3.3) distal bezüglich der mindestens einen Kernschicht (6) befestigt ist, und
- einer kratzfesten äußeren Deckschicht (4.1, 4.2) die einseitig auf der mindestens einen äußeren Deckschicht (5.1, 5.2) distal bezüglich der mindestens einen extrudierten klebenden Zwischenfolie (3.1, 3.2, 3.3) vorgesehen ist, **dadurch gekennzeichnet, dass** mindestens eine extrudierte klebende Zwischenfolie (3.2, 3.2, 3.3) extrudierte Folien (7.1, 7.2) mit einer dazwischen angeordneten funktionalen Schicht (8,9) aufweist.

2. Mehrschichtige Folie (2.1) nach Anspruch 1,
**dadurch gekennzeichnet, dass** jeweils eine extrudierte klebende Zwischenfolie (3.1, 3.2) auf jeder Seite der Kernschicht (6) aufgeklebt ist,
- wobei eine äußere Deckschicht aus mikrokristallinem Polyamid (mcPA) (5.1, 5.2) an jeder der doppelten extrudierten klebenden Zwischenfolie (3.1, 3.2) distal bezüglich der mindestens einen Kernschicht (6) befestigt ist, und
- kratzfeste äußere Deckschichten (4.1, 4.2) auf jeder Seite der äußeren Deckschichten (5.1, 5.2) distal bezüglich der beiden extrudierten klebenden Zwischenfolien (3.1, 3.2) vorgesehen sind.

3. Mehrschichtige Folie (2.1) nach Anspruch 1,
**dadurch gekennzeichnet, dass** die funktionale Schicht (8, 9) ein aktives elektrochromatisches Polymer, eine elektrisch leitende Beschichtung und/oder ein Drahtgitter ist.

4. Mehrschichtige Folie (3.1) nach Anspruch 1,
**dadurch gekennzeichnet, dass** eine klebende Grundierung vorgesehen ist zum Verkleben der beiden extrudierten Folien (7.1, 7.2) mit der funktionalen Schicht (8, 9).

5. Mehrschichtige Folie (2.1, 2.2) nach Anspruch 1 oder 2,
**dadurch gekennzeichnet, dass** die äußere Deckschicht (5.1, 5.2) aus mikrokristallinem Polyamid (mcPA) als UV-Schutz optische Aufheller aufweist.

6. Mehrschichtige Folie (2.1) nach Anspruch 3,
**dadurch gekennzeichnet, dass** die beiden extrudierten Folien (7.1, 7.2) aus Ionoplast Zusammensetzungen (IOPL), transparentem thermoplastischen Polyurethan (TPU) oder Polyvinylbutyral (PVB) oder aus einer Kombination von Ionoplast-Zusammensetzungen (IOPL), transparentem thermoplastischen Polyurethan (TPU) oder Polyvinylbutyral (PVB) hergestellt sind, wobei eine der inneren Kontaktseiten zwischen den beiden extrudierten Folien (7.1, 7.2) mit der leitenden Beschichtung als eine funktionale Schicht (8) versehen sind, und dadurch, dass die leitende Beschichtung mit elektrischen Kontakten versehen ist.

7. Mehrschichtige Folie (2.1) nach Anspruch 6,
**dadurch gekennzeichnet, dass** die leitende Beschichtung vorzugsweise aus Metall besteht, und hergestellt ist durch physikalische Abscheidung aus der Gasphase (PVD) mit transparenten leitenden Oxiden (TCO), zum Beispiel Indiumzinnoxid, oder dadurch, dass die funktionale Schicht (9) mit einem leitenden Drahtgitter versehen ist.

8. Mehrschichtige Folie (2.1) nach Anspruch 6,
**dadurch gekennzeichnet, dass** die leitende Beschichtung laminiert ist als eine Polymerschicht mit stellenweise einer elektrochromatisch aktiven Komponente zwischen den extrudierten Folien (7.1, 7.2).

9. Mehrschichtige Folie (2.1, 2.2) nach Anspruch 7 oder 8,
**dadurch gekennzeichnet, dass** das aktive elektrochromatische Polymer, die metallische leitende Beschichtung und/oder das Drahtgitter als Mittel zum Dimmen/Verdunkeln automatisch ausgeschaltet werden, wenn der Strom des Luftfahrzeugs ausgeschaltet wird oder wenn der Strom durch einen Störfall ausfällt.

10. Mehrschichtige Folie (2.1, 2.2) nach Anspruch 1 oder 2,
**dadurch gekennzeichnet, dass** die kratzfeste äußere Deckbeschichtung mit einer Antireflektionsbeschichtung kombiniert ist, wobei die Antireflektionsbeschichtung eine einschichtige oder mehrschichtige Interferenzbeschichtung ist.

11. Mehrschichtige Folie (2.1, 2.2) nach Anspruch 1 oder 2,
**dadurch gekennzeichnet, dass** 0,01 bis 0,1 Gewichtsprozent eines Infrarot absorbierenden Materials in die Zusammensetzung der äußeren Deckschicht (5.1, 5.2) auf der Grundlage eines mikrokristallinne Polyamids (mcPA) eingemischt ist.

12. Verfahren zur Herstellung der mehrschichtigen Folie (2.1, 2.2) nach einem der vorstehenden Ansprüche in vier Schritten, vorzugsweise in einer Reinraumumgebung, mit den Schritten:
- Herstellen mindestens einer extrudierten klebenden Zwischenfolie (3.1 - 3.3) in einem ersten Schritt durch Behandeln der ersten extrudierten Folie (7.1) und der zweiten extrudierten Folie (7.2) mit einer klebenden Grundierung und durch Anbringen der beiden Folien (7.1, 7.2) auf beiden Seiten der funktionalen Schicht (8),
- in einem zweiten Schritt, Herstellen der mindestens einen äußeren Deckschicht (5.1, 5.2) aus mikrokristallinem Polyamid (mcPA) und einer Kernschicht (6) aus einem Polymer eines mikrokristallinen Polyamids (mcPA) oder eines Polycarbonats (PC) entweder durch Spritzprägen bei Temperaturen von 300° C für die Polycarbonat-(PC)-Schichten und bei 280-300° C für die mikrokristallinen Polyamidschichten (mcPA), mit Gussformtemperaturen von 80° C in beiden Fällen,
oder durch Wärmeverformung/Gestaltung von Polycarbonat (PC) und mikrokristallinem Polyamid (mcPA) bilden bei Temperaturen zwischen 140° C und 145° c für jeden einzelnen Bogen oder für alle Bögen in einem Schritt,
- in einem dritten Schritt Zusammenfügen durch Auslegen der Kernschicht (6), Formen und Aufheizen auf zwischen 60° C und 110° C der mindestens einen extrudierten klebenden Zwischenfolie (3.1 - 3.3) um die Kernschicht (6), Hinzufügen der mindestens einen äußeren Deckschicht (5.1, 5.2) und Aushärten des Ganzen in einem Autoklaven,
- in einem vierten Schritt Beschichten des Ganzen auf mindestens einer äußeren Deckschicht (5.1, 5.2) durch eine Plasmabehandlung.

13. Verfahren nach Anspruch 12,
**gekennzeichnet durch** eine Bogenverformung mit nur einer Form, oder - wenn die Radien der Bögen zu klein sind - mit mehreren geometrisch angepassten Formen.

## Revendications

1. Un feuillet transparent multicouche (2.1, 2.2) pour un cockpit d'aéronef, en particulier une fenêtre multicouche de cockpit d'hélicoptère (1), comprenant :
- une couche centrale (6) en polymère de polycarbonate (PC) ou en polyamide microcristallin (mcPA),
- au moins un film intermédiaire adhésif extrudé (3.1, 3.2, 3.3) collé unilatéralement à ladite au moins une couche centrale (6),
- au moins une couche extérieure supérieure (5.1, 5.2) en polyamide microcristallin (mcPA), contenant de préférence des additifs, ladite au moins une couche extérieure supérieure (5.1, 5.2) étant fixée unilatéralement audit au moins un film intermédiaire adhésif extrudé (3.1, 3.2, 3.3) distal par rapport à ladite au moins une couche centrale (6), et
- un revêtement extérieur supérieur anti-rayure (4.1, 4.2), appliqué unilatéralement sur ladite au moins une couche extérieure supérieure (5.1, 5.2) distale par rapport audit au moins un film intermédiaire adhésif extrudé (3.1, 3.2, 3.3),
**caractérisé en ce que** l'au moins un film intermédiaire adhésif extrudé (3.1, 3.2, 3.3) comprend deux films extrudés (7.1, 7.2) avec une couche fonctionnelle (8, 9) intermédiaire.

2. Le feuillet transparent multicouche (2.1) selon la revendication 1,
**caractérisé en ce qu'**un film intermédiaire adhésif extrudé (3.1, 3.2,) est respectivement collé de chaque côté de ladite couche centrale (6),
- une couche extérieure supérieure en polyamide microcristallin (mcPA) (5.1, 5.2) est fixée de chaque côté dudit film intermédiaire adhésif extrudé bilatéral (3.1, 3.2,) distal par rapport à ladite au moins une couche centrale (6), et
- des revêtements extérieurs supérieurs anti-rayure (4.1, 4.2) sont appliqués de chaque côté desdites couches extérieures supérieures (5.1, 5.2) distales par rapports auxdits films intermédiaires adhésifs extrudés (3.1, 3.2).

3. Le feuillet transparent multicouche (2.1) selon la revendication 1,
**caractérisé en ce que** la couche fonctionnelle (8, 9) est un polymère électro-chromatique actif, un revêtement conducteur et/ou un grillage de fil.

4. Le feuillet transparent multicouche (2.1) selon la revendication 1,
**caractérisé en ce qu'**un apprêt adhésif est prévu pour l'adhérence des deux films extrudés (7.1, 7.2) sur la couche fonctionnelle (8, 9).

5. Le feuillet transparent multicouche (2.1, 2.2) selon les revendications 1 ou 2,
**caractérisé en ce que** la couche extérieure supérieure (5.1, 5.2) en polyamide microcristallin (mcPA) contient des azurants optiques pour la protection contre les UV.

6. Le feuillet transparent multicouche (2.1) selon la revendication 3,
**caractérisé en ce que** les deux films extrudés (7.1, 7.2) sont composés d'ionoplast (IOPL), de polyuréthane thermoplastique transparent (TPU) ou de butyral polyvinylique (PVB) ou d'une combinaison des trois, une des faces de contact intérieures entre les deux films extrudés (7.1, 7.2) étant pourvue du revêtement conducteur en tant que couche fonctionnelle (8) et **en ce que** le revêtement conducteur est pourvu des contacts électriques.

7. Le feuillet transparent multicouche (2.1) selon la revendication 6,
**caractérisé en ce que** le revêtement conducteur est préférablement métallique, obtenu par dépôt physique en phase vapeur (PVD) avec des oxydes conducteurs transparents (TCO), par exemple de l'oxyde d'étain d'indium, ou **en ce que** la couche fonctionnelle (9) est réalisée par un grillage de fil conducteur.

8. Le feuillet transparent multicouche (2.1) selon la revendication 6,
**caractérisé en ce que** le revêtement conducteur est stratifié sous la forme d'une couche de polymère avec localement un composant électro-chromatique entre les films extrudés (7.1, 7.2).

9. Le feuillet transparent multicouche (2.1, 2.2) selon les revendications 7 ou 8,
**caractérisé en ce que** le polymère électro-chromatique actif, le revêtement conducteur métallique et/ou le grillage de fil comme moyens d'affaiblissement/obscurcissement sont automatiquement inhibés en cas de coupure ou de perte accidentelle de l'alimentation de l'aéronef.

10. Le feuillet transparent multicouche (2.1, 2.2) selon les revendications 1 ou 2, **caractérisé en ce que** le revêtement extérieur supérieur anti-rayure est combiné à un revêtement antireflet, ledit revêtement antireflet étant un revêtement d'interférence monocouche ou multicouche.

11. Le feuillet transparent multicouche (2.1, 2.2) selon les revendications 1 ou 2, **caractérisé en ce qu'**entre 0,01 pour cent et 0,1 pour cent par poids de matériau absorbant les IR est mélangé dans la composition de la couche extérieure supérieure (5.1, 5.2) à base de polyamide microcristallin (mcPA).

12. Une méthode de production en quatre étapes du feuillet transparent multicouche (2.1, 2.2) selon l'une quelconque des revendications précédentes, de préférence en salle blanche, prévoyant de :
- fabriquer au moins un film intermédiaire adhésif extrudé (3.1 - 3.3) durant une première étape en traitant avec un apprêt adhésif le premier film extrudé (7.1) et le second film extrudé (7.2) et en appliquant les deux films (7.1, 7.2) sur les deux faces de la couche fonctionnelle (8),
- fabriquer durant une deuxième étape au moins une couche extérieure supérieure (5.1, 5.2) en polyamide microcristallin (mcPA) et une couche centrale (6) en polymère de polyamide microcristallin (mcPA) ou de polycarbonate (PC) par moulage injection sous pression soit à une température de 300 °C pour les couches de polycarbonate (PC) soit à une température de 280-300 °C pour les couches de polyamide microcristallin (mcPA), avec une température des moules de 80°C dans les deux cas,
ou par thermoformage des feuilles de polycarbonate (PC) et de polyamide microcristallin (mcPA) à des températures comprises entre 140°C et 145°C pour chaque feuille individuelle ou pour toutes les feuilles en une étape,
- assembler durant une troisième étape par drapage de la couche centrale (6), en formant et chauffant entre 60 °C et 110 °C l'au moins un film intermédiaire adhésif extrudé (3.1 - 3.3) autour de la couche centrale (6), en ajoutant l'au moins une couche extérieure supérieure (5.1, 5.2) et en cuisant l'ensemble dans un autoclave,
- revêtir l'assemblage durant une quatrième étape par traitement plasma sur au moins une couche extérieure supérieure (5.1, 5.2).

13. La méthode selon la revendication 12,
**caractérisée par** le formage de feuillet avec uniquement un moule ou - si les rayons de feuillets sont trop faibles - plusieurs moules géométriquement adaptés.
